# EUROPÄISCHE PATENTSCHRIFT

(11) **EP 3 110 669 B1**
(45) Veröffentlichungstag und Bekanntmachung des Hinweises auf die Patenterteilung: **06.06.2018**
(21) Anmeldenummer: 15706247.2
(22) Anmeldetag: 25.02.2015
(51) Int. Cl.: B60T 7/22, B66F 9/24, B66F 17/00, H01H 9/02, H01H 3/02

(54) **SICHERHEITS-SCHALTANORDNUNG AN EINEM BEWEGLICHEN GERÄT, UND VERFAHREN ZUR HERSTELLUNG EINER DERARTIGEN SCHALTANORDNUNG**
SAFETY CIRCUIT ARRANGEMENT ON A MOVABLE DEVICE, AND METHOD FOR PRODUCING SUCH A CIRCUIT ARRANGEMENT
ENSEMBLE DE COMMUTATION DE SÉCURITÉ SUR UN APPAREIL MOBILE, ET PROCÉDÉ DE PRODUCTION D'UN DISPOSITIF DE COMMUTATION DE CE TYPE

(30) Priorität: 27.02.2014 DE 202014001722 U
(43) Veröffentlichungstag der Anmeldung: 04.01.2017
(73) Patentinhaber: Haake, André, 48703 Stadtlohn (DE); Haake, Oliver, 48703 Stadtlohn (DE); Haake, Patrick, 48691 Vreden (DE)
(72) Erfinder: Haake, André, 48703 Stadtlohn (DE); Haake, Oliver, 48703 Stadtlohn (DE); Haake, Patrick, 48691 Vreden (DE)
(74) Vertreter: Habbel, Ludwig
(86) Internationale Anmeldenummer: PCT/EP2015/053951
(87) Internationale Veröffentlichungsnummer: WO 2015/128387

(56) Entgegenhaltungen:
- EP-A1- 0 582 100
- EP-A2- 0 298 714
- DE-A1- 3 824 637
- FR-A1- 2 523 908
- FR-A1- 2 633 571

## Beschreibung

Die Erfindung betrifft eine Sicherheits-Schaltanordnung nach dem Oberbegriff des Anspruchs 1 sowie ein Verfahren zu ihrer Herstellung.

Aus der FR 2 523 908 A1, die als nächstkommender Stand der Technik angesehen wird, ist ein Flurförderzeug bekannt, welches eine dreidimensional geformte Prallflächen aufweist, die insgesamt eine Umhausung in Art einer Haube oder eines Gehäuse bildet. Die Prallfläche ist mittels Federn an der Karosserie des Flurförderzeugs aufgehängt sind. Wenigstens ein Schaltelement ist an der Karosserie des Flurförderzeugs gehalten und liegt dieser Haube bzw. diesem Gehäuse an. Bei Kontakt mit einem Hindernis bewegt sich die Haube bzw. das Gehäuse relativ zur Karosserie, so dass das Schaltelement betätigt wird. Das Schaltelement weist dabei einen Stift auf, und an der Umhausung ist ein Nocken vorgesehen, dem der Stift anliegt.

Auch aus der EP 0 582 100 A1 ist eine Kollisionsschutzeinrichtung für fahrerlose Flurförderzeuge bekannt. Diese umfasst eine als "Kollisionsfühler" bezeichnete Prallplatte, die mittels eines Scherengelenks beweglich an der Karosserie des Flurförderzeugs gehalten ist. Wird die Prallplatte gegen die Karosserie gedrückt, so gerät ein Hebel des Scherengelenks gegen einen Schalter, so dass dann automatisch Schutzmaßnahmen erfolgen können, beispielsweise eine Abschaltung des Antriebs des Flurförderzeugs. Der Abstand zwischen der Karosserie des Flurförderzeugs und der Prallplatte wird durch ein umlaufendes, sogenanntes Schaltband überspannt. Gerät ein Gegenstand oder eine Person in diesen Abstand und drückt dabei das flexible Schaltband ein, so registriert dabei ein an dem Schaltband anliegender Sensor die Bandverschiebung. In diesem Fall können automatisch dieselben Schutzmaßnahmen erfolgen wie wenn die Prallplatte gegen die Karosserie gedrückt wird.

Aus der FR 2 633 571 A1 ist ebenfalls ein Flurförderzeug bekannt dessen Prallplatte mittels eines Gelenkhebel-Mechanismus beweglich an der Karosserie gehalten ist und zur Karosserie hin gedrückt werden kann. Nicht an der Karosserie selbst, sondern an dem Gelenkhebel-Mechanismus ist ein Schalter angeordnet, der ab einer bestimmten Winkelstellung der Gelenkhebel, wenn sich die Prallplatte um ein bestimmtes Maß der Karosserie angenähert hat, eine entsprechende Schutzschaltung des Flurförderzeugs auslöst.

Aus der DE 38 24 637 A1 ist eine Sicherheitssteuerung für Fahrzeuge bekannt. Dabei ist ein Mikroschalter vorgesehen, der nicht innerhalb einer Umhausung angeordnet ist. Vielmehr ist vor dem Mikroschalter, vom Fahrzeug aus weiter außen angeordnet als der Mikroschalter, eine bewegliche Prallplatte vorgesehen. Wird die Prallplatte nach innen gedrückt, so wird der Mikroschalter betätigt. In ähnlicher Weise ist aus der EP 0 298 714 A2 ein Bremssystem für Motorfahrzeuge bekannt. Die Prallplatte ist gelenkig aufgehängt und gerät, wenn sie nach innen gedrückt wird gegen einen Sensor.

Aus der Praxis ist es bekannt, bei beweglichen Geräten zum Unfallschutz eine gattungsgemäße Schaltanordnung am Gerät vorzusehen. Derartige Geräte können beispielsweise Teile einer größeren Anlage sein, beispielsweise frei bewegliche Gelenkarme, Ausleger o. dgl., oder die beweglichen Geräte können als Fahrzeuge ausgestaltet sein, beispielsweise als Flurförderfahrzeuge. Nachfolgend wird rein beispielhaft und stellvertretend für auch andere Geräte stets ein elektromotorisch bewegliches Flurförderfahrzeug als Anwendungsbeispiel erwähnt.

Es ist bekannt, an einem Flurförderfahrzeug eine gattungsgemäße Schaltanordnung vorzusehen, die als Schalter eine Schaltleiste aufweist, also ein flexibles, verformbares, leisten- oder schlauchartiges Element, und dieses am Gehäuse des Flurförderfahrzeugs anzuordnen.

Da die gattungsgemäße Schaltanordnung zum Unfall- bzw. Personenschutz dient, ist sie außen an dem beweglichen Gerät angeordnet. Bei einem Flurförderfahrzeug besteht beispielsweise eine Unfallgefahr darin, dass bei Rangierarbeiten auf engem Raum der Bediener das Flurförderfahrzeug bei Rückwärtsfahrt zu nah an sich heran steuert und dabei mit seinem eigenen Fuß unter das Flurförderfahrzeug gerät. Die gattungsgemäßen Schaltanordnungen sind daher außen am Gehäuse des Flurförderfahrzeugs vorgesehen, um einen möglichst frühzeitigen Kontakt und somit eine möglichst frühzeitige Auslösung des betreffenden Schalters sicherzustellen, so dass der Antrieb des Flurförderfahrzeugs möglichst frühzeitig abgeschaltet werden kann. Bei anderen Anwendungsbeispielen als bei Flurförderfahrzeugen kann vorgesehen sein, statt der Abschaltung eines Antriebsmotors eine Umschaltung des Antriebsmotors auszulösen, um eine Richtungsumkehr zu bewirken, oder es kann vorgesehen sein, ein Warnsignal mittels des Schalters der Schaltanordnung auszulösen.

Um die entsprechend frühzeitige Warnung bzw. das möglichst schnelle Umschalten des Gerätes in einen sicheren Betriebszustand zu ermöglichen, sind die gattungsgemäßen Schaltanordnungen dementsprechend exponiert außen am Gerät angebracht. Dies ist aus den genannten Sicherheitsgründen vorteilhaft, birgt aber andererseits die Gefahr, dass die Schaltanordnung selbst beschädigt wird, beispielsweise beim Kontakt mit harten Gegenständen wie Mauerwerk, Regalbauten, Paletten, fest installierten Maschinen oder, wie bei dem erläuterten Anwendungsbeispiel, mit anderen Flurförderfahrzeugen. Die Beschädigung der Schaltanordnung kann dazu führen, dass die Schaltanordnung funktionslos wird und somit die angestrebte Sicherheit des Gerätes nicht mehr gewährleisten kann. Dies führt entweder dazu, dass das Gerät unsicher weiter betrieben wird, oder dass es instandgesetzt wird, was die Verfügbarkeit des Gerätes verschlechtert und daher wirtschaftlich nachteilig ist.

Aus der US 5 653 568 A1 ist eine gattungsgemäße Sicherheits-Schaltanordnung bekannt, die als Sicherheitseinrichtung im Bereich Flurförderfahrzeuge oder im Bereich hydraulischer LKW-Ladeklappen verwendbar ist, und bei welcher elektrische Kontakte innerhalb eines verformbaren Hohlprofils angeordnet sind. Durch Kontakt mit dem Hohlprofil wird dieses verformt, nämlich zusammengedrückt, so dass die Kontakte einander berühren und der gewünschte Schaltvorgang ausgelöst werden kann. Das verformbare Hohlprofil stellt in diesem Fall unmittelbar einen Teil des Schalters dar, welches nämlich einen der beiden elektrischen Kontakte trägt. Gleichzeitig bildet es auch die Prallfläche, die durch Druck von außen bewegt werden muss. Eine Beschädigung des Hohlprofils bedeutet auch in diesem Fall eine Beschädigung des Schalters selbst.

Der Erfindung liegt die Aufgabe zugrunde, eine gattungsgemäße Schaltanordnung dahingehend zu verbessern, dass diese einen möglichst sicheren Betrieb des Gerätes bei einer möglichst hohen Geräteverfügbarkeit ermöglicht. Weiterhin liegt der Erfindung die Aufgabe zugrunde, ein Verfahren zur Herstellung der Schaltanordnung anzugeben, welches die Ausrüstung, insbesondere auch eine Nachrüstung, unterschiedlicher Geräte mit einer solchen Schaltanordnung ermöglicht.

Diese Aufgabe wird durch eine Schaltanordnung mit den Merkmalen des Anspruchs 1 und durch ein Verfahren nach Anspruch 12 oder 13 gelöst. Vorteilhafte Ausgestaltungen sind in den Unteransprüchen beschrieben.

Die Erfindung schlägt mit anderen Worten erstens vor, dass der Schalter als Schaltleiste oder Schaltmatte ausgestaltet ist.

Vorschlagsgemäß ist zudem vorgesehen, dass die den Schalter nach außen abdeckende Umhausung eine separate Prallfläche aufweist, die zur Betätigung des Schalters dient und daher als Betätiger des Schalters bezeichnet wird. Beschädigungen der Prallfläche stellen daher nicht eine Beschädigung des Schalters selbst dar, sondern lediglich eines separaten Elements.

Vorschlagsgemäß ist weiterhin vorgesehen, dass die Prallfläche im Falle einer Beschädigung schnell ausgewechselt werden kann. Zu diesem Zweck ist sie auswechselbar an einer Halterung gehalten. Sollte die Schaltanordnung beschädigt werden, so stellt die Umhausung mit der Prallfläche ein auswechselbares Element bereit, welches schnell ausgewechselt werden kann, ohne den Schalter selbst auswechseln zu müssen, sodass in vielen Beschädigungsfällen der Schalter am Gerät verbleiben kann und lediglich die äußere Prallfläche ausgetauscht zu werden braucht. Durch diese schnelle Reparatur bleibt die Verfügbarkeit des Geräts hoch, auch wenn Beschädigungen an der Schaltanordnung auftreten.

Vorschlagsgemäß ist die Prallfläche starr ausgestaltet. Dies weist einerseits den Vorteil einer möglichst hohen mechanischen Robustheit auf, da bei schräg einwirkenden Kräften ein Abgleit-Effekt auftritt. Zudem ermöglicht die starre Ausgestaltung der Prallfläche eine besonders sensible Auslösung des Schalters dadurch, dass eine Auslösung des Schalters zuverlässig auch dann sichergestellt wird, wenn der Kontakt eines Hindernisses mit der Umhausung ggf. auch an einer vergleichsweise ungünstigen Stelle erfolgt. Wenn beispielsweise der Schalter nicht vollflächig hinter der Prallfläche angeordnet ist, weist die Prallfläche erste Flächenbereiche auf, hinter denen sich der Schalter befindet, und zweite Flächenbereiche, hinter denen sich kein Schalter befindet. Wenn der erwähnte Kontakt eines Hindernisses mit der Prallfläche an einem solchen zweiten Flächenbereich erfolgt, gibt die Prallfläche bei diesem Kontakt nicht lokal nach, sondern stellt aufgrund ihrer starren Ausgestaltung sicher, dass sie die Bewegung, die sie beim Kontakt mit dem Hindernis vollführt, auch auf einen ersten, von der Kontaktstelle entfernten Flächenbereich überträgt, so dass das Ansprechverhalten des Schalters optimiert ist.

Die starre Ausgestaltung der Prallfläche ermöglicht zudem eine besonders vielfältige optische Erscheinung der Prallfläche mit einfachen Mitteln, selbst wenn die Prallfläche aus einem Kunststoffmaterial besteht: so kann die Prallfläche beispielsweise mit einer farbigen oder metallischen Folie foliert werden, oder sie kann lackiert werden, oder sie kann mit hölzernen oder metallischen Elementen beklebt werden, oder sie kann mit einer metallisch wirkenden so genannten Chromatierung beschichtet werden, wobei diese aufgelisteten Möglichkeiten der optischen Ausgestaltung nicht abschließend ist. Dadurch, dass die Prallfläche nicht in sich flexibel verformbar sein muss, erweitert sich der Spielraum an Möglichkeiten, welche Gegenstände bzw. Materialien auf die Prallfläche aufgebracht werden können, erheblich. Zudem müssen die verwendeten Materialien keine sogenannten Weichmacher enthalten, was erstens aus ökologischen Gründen vorteilhaft ist und zweitens langlebig gleichbleibende Eigenschaften der Schaltanordnung ermöglicht, da ein Einfluss auf das Verhalten der Prallfläche vermieden wird, der ansonsten aufgrund von sich verflüchtigenden Weichmachern die Materialeigenschaften der Prallfläche verändern könnte.

Die Prallfläche kann insofern vorteilhaft aus Kunststoff bestehen, als aufgrund der wirtschaftlichen und technisch problemlosen Möglichkeit, das verwendete Kunststoffmaterial zu verformen, der Prallfläche eine gewünschte Formgebung verliehen werden kann. Abgesehen von der Verwendung eines Kunststoffmaterials kann die Prallfläche jedoch auch aus anderen Materialien bestehen, die entweder keine weitere Oberflächenbehandlung erfordern, oder die ohnehin in an sich bekannter Weise problemlos und vielfältig behandelt werden können, wie dies zum Beispiel bei metallischen Prallflächen der Fall ist.

Da die Prallfläche starr ausgestaltet ist, ist sie vorschlagsgemäß elastisch bzw. beweglich gelagert, so dass sie zwischen einer ersten und einer zweiten Stellung beweglich ist. Die erste Stellung wird als Ruhestellung bezeichnet. Sie gewährleistet den ungehinderten Betrieb des mit der Schaltanordnung versehenen Gerätes. Die zweite Stellung hingegen wird als Betätigungsstellung bezeichnet, da die Prallfläche in dieser Stellung den Schalter betätigt und dementsprechend einen Schaltvorgang auslöst.

Vorschlagsgemäß ist schließlich vorgesehen, dass zwischen der Prallfläche und dem Schalter ein als Auslöser bezeichneter Vorsprung angeordnet ist. Dieser Vorsprung kann von der entsprechend geformten Prallfläche geschaffen sein, indem diese einen oder mehrere Vorsprünge aufweist, die auf ihrer Innenseite angeordnet sind, also auf der zum Gerät hin gerichteten Oberfläche der Prallfläche. Dieser Vorsprung dient zu einer besonders frühzeitigen Auslösung des Schaltvorgangs, indem dieser Vorsprung beispielsweise unmittelbar einem taktilen Schalter anliegen kann. Wird nun die Prallfläche nicht unmittelbar an der Außenseite dort, wo einer der oben erwähnten ersten Flächenabschnitte vorgesehen ist und sich auf ihrer Innenseite der Auslöser befindet, gegen ein Hindernis geführt, so bewirkt auch ein Kontakt des Hindernisses mit der Prallfläche im Abstand von dem Auslöser, nämlich in einem der oben erwähnten zweiten Flächenabschnitte, dass aufgrund der Starrheit der Prallfläche der Auslöser den Schaltvorgang auslöst, indem beispielsweise dieser Vorsprung gegen den taktilen Sensor geführt wird oder dem kapazitiven Sensor entsprechend weit angenähert wird oder in den Erfassungsbereich eines optischen Sensors geführt wird, so dass jedenfalls dieser als Auslöser bezeichneten Vorsprung einen Schaltvorgang des Schalters auslöst.

Anwendungsgebiete, wo eine vorschlagsgemäße Schaltanordnung eingesetzt werden kann, sind beispielsweise selbstfahrende oder auch von Personal betätigte Flurförderfahrzeug. Andere Anwendungsgebiete sind z. B. Drehtüren, wo ein Klemmschutz zwischen den beweglichen Flügeln und einem äußeren, feststehenden Rahmen bzw. dem Boden erzielt werden soll. Die Sicherheits-Schaltanordnung kann bei diesem Anwendungsfall an den Hochkanten entweder der Flügel oder des Rahmens angeordnet sein, oder an der Unterkante eines Türflügels. Weitere Anwendungsgebiete können beispielsweise Portalanlagen betreffen, beispielsweise Portalfräsen, oder sie können Maschinenhauben betreffen, oder sie können Roboterarme betreffen, also jeweils bewegliche Elemente, die im Rahmen des vorliegenden Vorschlags als Geräte bezeichnet werden. Nachfolgend wird rein beispielhaft, und stellvertretend auch für andere Anwendungsgebiete, die Verwendung einer vorschlagsgemäßen Sicherheits-Schaltanordnung bei einem Flurförderfahrzeug erläutert.

Eine besonders einfache Installation der Schaltanordnung ist möglich, wenn diese an dieselben Kontakte angeschlossen werden kann, an die auch ein handbetätigter Not-Aus-Schalter angeschlossen ist, wie er bei vielen Geräten vorgesehen ist. So wird bei einer automatischen Auslösung der Schaltanordnung dieselbe Schaltwirkung erzielt wie bei der bewussten, manuellen Betätigung des erwähnten Not-Aus-Schalters. Zudem sind in diesem Fall keine tiefen Eingriffe in eine Antriebssteuerung erforderlich, so dass bei einer Serienfertigung der Geräte die vorschlagsgemäße Schaltanordnung mit geringem Aufwand in eine solche Serienfertigung einbezogen werden kann, und so dass sie auch bei bereits vorhandenen Geräten mit geringem Aufwand nachgerüstet werden kann.

Die Prallfläche kann zugunsten einer besonders wirtschaftlichen Ausgestaltung der Schaltanordnung als eine Art Vorhang oder Schürze ausgestaltet sein, so dass sie beispielsweise aus einem größeren, handelsüblichen Flächenelement zugeschnitten werden kann wie z. B. einer Gummimatte, einer LKW-Plane oder dergleichen.

In einer ersten Ausgestaltung kann vorteilhaft vorgesehen sein, dass die Halterung einen flexibel verformbare Körper aufweist, dem die Prallfläche großflächig anliegt. Beispielsweise kann die Prallfläche an diese Halterung mittels eines vergleichsweise schwachen Klebers angeklebt sein, so dass sie einerseits im Betrieb sicher an der Halterung verbleibt, im Beschädigungsfall jedoch problemlos ausgewechselt werden kann. Oder die Prallfläche kann mittels eines Häkchenverschlusses betriebssicher, aber lösbar, an der Halterung befestigt sein.

Ein solch flexibel verformbare Körper kann vorteilhaft aus einem Schaumwerkstoff bestehen, beispielsweise aus einem geschäumten Kunststoff. Derartige Werkstoffe sind wirtschaftlich handelsüblich erhältlich und können problemlos bearbeitet werden, beispielsweise um ihnen eine bestimmte äußere Kontur zu verleihen, oder um Hohlräume in einen solchen Schaumstoffkörper einzubringen und beispielsweise den Schalter innerhalb dieses flexibel verformbaren Körpers anzuordnen.

Vorteilhaft kann die Halterung, welche die starre Prallfläche hält, als eine flexible Leiste ausgestaltet sein, an welcher die Umhausung frei nach unten hängt. Diese flexible Leiste ermöglicht die gewünschte Beweglichkeit, um die starre Prallfläche zwischen ihrer Ruhestellung und ihrer Betätigungsstellung bewegen zu können. Dadurch, dass die Leiste insgesamt flexibel ausgestaltet ist, wird eine Beweglichkeit der starren Prallfläche in mehreren unterschiedlichen Richtungen ermöglicht, so dass besonders zuverlässig bei Kräften, die aus unterschiedlichen Richtungen von außen einwirken, die Prallfläche zu einer Auslösung des Schalters führen kann. Durch ihre flexible Ausgestaltung ist die Leiste gegenüber Stößen und anderen Einflüssen robuster als beispielsweise eine Scharnieranordnung, die aus starren einzelnen Elementen besteht. Dadurch, dass die Prallfläche frei nach unten hängt, wird einerseits die Beweglichkeit der Prallfläche im Hinblick auf eine möglichst sensible Ansprache beim Kontakt mit Hindernissen verbessert, und zum zweiten wird auf diese Weise ein besonders schneller Austausch der Prallfläche bei eventuellen Beschädigungen ermöglicht, da nämlich die Prallfläche nicht aus einem ringsum verlaufenden Rahmen entfernt werden muss.

Vorteilhaft kann die flexible Leiste, welche die Halterung für die Prallfläche bildet, als Profilleiste aus einem Elastomerwerkstoff ausgestaltet sein. Im Vergleich zu vorgefertigten Formteilen ermöglicht die Ausgestaltung der Leiste als Profilleiste eine einfache und wirtschaftliche Anpassung an unterschiedliche Geräte, indem einfach die flexible Leiste in passender Länge von einem entsprechenden Endlos-Profilstrang abgeschnitten wird, der beispielsweise als Strangpressprofil hergestellt ist. Die Ausgestaltung der Profilleiste aus einem Elastomerwerkstoff ermöglicht, dass die Halterung keine komplizierte Montage erfordert und ohne mechanisch empfindliche Bauteile herstellbar ist, wie beispielsweise ein Scharnier aus mehreren beweglichen, jeweils starren Scharnierelementen. Dennoch ist die gewünschte Beweglichkeit der Prallfläche gegeben, wenn diese an der Elastomer-Profilleiste befestigt ist.

Vorteilhaft kann die Profilleiste als Hohlprofil ausgestaltet sein, welches im Querschnitt eine Hohlkammer aufweist. Durch diese Ausgestaltung wird die Beweglichkeit der Profilleiste verbessert und somit auch die Beweglichkeit der Prallfläche, die an der Profilleiste gehalten ist, zugunsten eines möglichst sensiblen Ansprechverhaltens der Schaltanordnung.

Die Prallfläche kann zu Gunsten möglichst kurzer Reparaturzeiten vorteilhaft weitestgehend werkzeuglos auswechselbar an der Halterung gehalten sein. Beispielsweise können flexible pilzförmige Elemente vorgesehen sein, auf welche die Prallfläche, die entsprechende Öffnungen aufweist, aufgeknöpft werden kann. Eine technisch besonders einfache und wirtschaftliche sowie mechanisch robuste Ausgestaltung der Halterung kann vorteilhaft vorgesehen sein, indem die Halterung eine Nut aufweist, welche die Prallfläche aufnimmt, so dass zu Gunsten eines schnellen Austausches die Prallfläche lediglich aus dieser Nut herausgezogen werden muss. Die Nut stellt sicher, dass die Prallfläche über ihre gesamte Länge an der Halterung zuverlässig geführt ist und ermöglicht so eine grundsätzlich werkzeuglose Befestigung der Prallfläche an der Halterung. Zur Sicherung der Prallfläche in der Nut können über die Länge der Halterung verteilt wenige Sicherungsmittel vorgesehen sein, beispielsweise Clips, Schrauben oder dergleichen. Nach dem eventuellen Lösen derartiger Sicherungsmittel kann die Prallfläche problemlos von der Halterung entfernt werden, nämlich aus der Nut herausgezogen werden und gegen ein Austauschteil ausgewechselt werden.

Ein sicherer Halt der Prallfläche in der Nut der Halterung kann dadurch bewirkt werden, dass die Prallfläche und die Nut miteinander komplementäre, korrespondierende Profilierungen aufweisen, so dass die Prallfläche formschlüssig in der Nut gehalten ist. Insbesondere wenn die Halterung als Elstomerprofil ausgestaltet ist, ergibt sich durch den Formschluss einerseits ein zuverlässiger Halt der Prallfläche an dem Elastomerprofil und andererseits bei entsprechend hoher Zugkraft eine Überwindung des Formschlusses dadurch, dass die elastische Halterung nachgibt und auf diese Weise die Prallfläche werkzeuglos aus der Nut entfernt werden kann.

Vorteilhaft kann die Prallfläche an ihrem unteren Rand nicht einfach geradlinig enden, sondern vielmehr dort zum Gerät hin gebogen verlaufen. Auf diese Weise ergibt sich eine vergrößerte Auslösefläche der Prallfläche an ihrem unteren Ende, nämlich dort, wo ggf. ein Spalt zum Untergrund besteht. Bei dem erwähnten Anwendungsbeispiel eines Flurförderfahrzeugs kann so einerseits eine verletzungsarme Ausgestaltung der Unterkante der starren Prallplatte sichergestellt werden, und zweitens wird insbesondere zum Spalt hin, der sich zwischen der Prallfläche und dem Boden ergibt, auf welchem das Flurförderfahrzeug fährt, eine vergleichsweise große Kontaktfläche geschaffen, so dass die Schaltanordnung besonders zuverlässig vor Verletzungsgefahren schützen kann und beispielsweise dazu dienen kann, den Antriebsmotor des Flurförderfahrzeugs möglichst frühzeitig abzuschalten.

Vorteilhaft ist die Prallfläche im wesentlichen nur so groß bemessen, dass sie den Schalter abdeckt. Auf diese Weise wird verhindert, dass außerhalb des Schalters Gegenstände zwischen das Gerät und die Prallfläche geraten können, die dann - insbesondere bei einer starre ausgestalteten Prallfläche - die Beweglichkeit der Prallfläche beeinträchtigen und das Auslösen des Schalters behindern könnten. Insbesondere wenn der Schalter als Schaltleiste oder Schaltmatte ausgestaltet ist, wird diesbezüglich die Funktionssicherheit der Sicherheits-Schaltanordnung verbessert: in diesem Fall führt ein Gegenstand oder führen Verschmutzungen, die zwischen die Prallfläche und den Schalter geraten, nicht etwa zu einem verschlechterten Ansprechverhalten der Schaltanordnung, sondern zu einem besonders empfindlichen Ansprechverhalten, weil sie ähnlich wie der vorschlagsgemäß vorgesehene, zwischen Prallplatte und Schalter angeordnete Auslöser eine besonders frühzeitige Betätigung des Schalters bewirken, nämlich bereits bei einer geringen Bewegung der Prallfläche.

Ein vorteilhaft ausgestaltetes Flurförderfahrzeug weist die vorschlagsgemäße Schaltanordnung außen an einem Gehäuse auf, welches den Antriebsmotor aufweist. In an sich bekannter Weise wird der Antriebsmotor mittels einer elektronischen Antriebssteuerung gesteuert. Die vorschlagsgemäße Schaltanordnung ist mit dieser Antriebssteuerung steuerungswirksam verbunden, so dass Schaltzustände der Schaltanordnung unmittelbar in der Antriebssteuerung verarbeitet werden können und beispielsweise beim Kontakt eines Hindernisses mit der Prallplatte der Antriebsmotor ausgeschaltet werden kann.

Zur Herstellung einer vorschlagsgemäßen Schaltanordnung kann vorteilhaft vorgesehen sein, zunächst die Oberflächengeometrie eines vorhandenen Bauteils mittels eines Scanners zu erfassen, wenn an dieses Bauteil die Schaltanordnung angebracht werden soll. Anschließend wird die Halterung in Anpassung an diese Oberflächengeometrie des Bauteils hergestellt, nämlich mittels eines 3-D-Verfahrens erzeugt. Als 3-D-Verfahren wird in diesem Zusammenhang ein Herstellungsverfahren bezeichnet, welches die Formgebung der herzustellenden Halterung computergesteuert anhand der eingescannten Daten vornimmt. Es kann dabei beispielsweise eine computergesteuerte Fräse verwendet werden, die aus einem Materialblock ein Bauteil mit der entsprechend ausgestalteten Oberfläche herausarbeitet, oder es kann dabei beispielsweise ein 3-D-Drucker verwendet werden, der lagenweise das gewünschte Bauteil, nämlich die Halterung, mit der gewünschten Kontur erstellt. Im Ergebnis kann jedenfalls die Halterung passgenau an die Oberfläche des betreffenden Bauteils angelegt werden, beispielsweise an einen Roboterarm, an den Heckbereich eines Flurförderfahrzeug, oder dergleichen.

In ähnlicher Weise kann bei der Herstellung einer vorschlagsgemäßen Schaltanordnung vorgesehen sein, die Prallfläche an die Oberfläche eines vorgefundenen, vorhandenen Bauteils anzupassen: auch hier ist in einem ersten Verfahrensschritt vorgesehen die Oberflächengeometrie des vorhandenen Bauteils mittels eines Scanners zu erfassen. Anschließend wird die Prallfläche mittels eines 3-D-Verfahrens erzeugt. Dabei wird die Prallfläche allerdings nicht so geformt, dass sie wie die erwähnte Halterung passgenau an die Oberfläche des Bauteils angelegt werden kann, sondern dass sie vielmehr in einem vorbestimmten Abstand zur Oberfläche des Bauteils verläuft. Dieser Abstand ist beispielsweise durch die jeweilige Ausgestaltung des Schalters und der Halterung bestimmt. Durch diese Verfahrensweise kann die Schaltanordnung so ausgestaltet werden, dass sie einerseits keinen hinderlichen, unnötig weit über das vorhandene Bauteil hinausstehenden Überstand bildet, und so dass sie sich harmonisch an das äußere Erscheinungsbild des Bauteils anpasst.

Ausführungsbeispiele vorschlagsgemäßer Schaltanordnungen werden anhand der rein schematischen Darstellungen nachfolgend näher erläutert. Dabei zeigt
- Fig. 1: eine Draufsicht auf ein Flurförderfahrzeug, welches mit einem ersten Ausführungsbeispiel einer Sicherheits-Schaltanordnung versehen ist,
- Fig. 2: einen horizontalen Schnitt und
- Fig. 3: einen vertikalen Schnitt durch das Flurförderfahrzeug und die Schaltanordnung von Fig. 1, und die
- Fig. 4 und 5: jeweils eine perspektivische Ansicht auf zwei weitere Ausführungsbeispiele von Sicherheits-Schaltanordnungen.

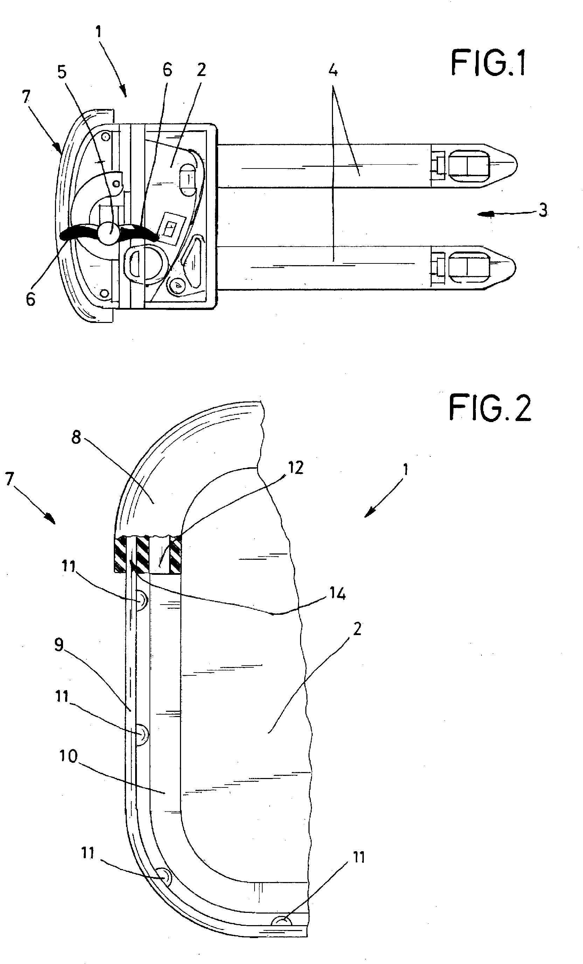

In den Fig. 1 bis 3 ist mit 1 jeweils insgesamt ein Flurförderfahrzeug bezeichnet, welches ein Gehäuse 2 aufweist sowie eine Gabel 3 mit zwei Zinken 4. In dem Gehäuse 2 ist ein elektrischer Antriebsmotor sowie ein elektrischer Energiespeicher angeordnet. Zur Steuerung des Flurförderfahrzeugs 1 ist eine Handhabe in Form einer Deichsel 5 vorgesehen, die in Fig. 1 aufrecht stehend dargestellt ist. Die Deichsel 5 weist neben zwei Handgriffen 6 auch Steuerungselemente wie Tasten, Schalter o. dgl. auf, die zur Steuerung des Antriebsmotors dienen und mit einer elektronischen Antriebssteuerung verbunden sind. Typischerweise ist dabei auch ein Not-Aus-Schalter vorgesehen.

Am Gehäuse 2 ist eine Schaltanordnung 7 vorgesehen, die in Fig. 1 übertrieben groß dargestellt ist und bei dem dargestellten Ausführungsbeispiel als Notausschalter dient, welcher bei Betätigung der Schaltanordnung 7 eine sofortige Abschaltung des Antriebsmotors bewirkt. Eine besonders einfache Installation der Schaltanordnung 7 ist dadurch möglich, dass diese an dieselben Kontakte angeschlossen ist, an die auch der erwähnten Not-Aus-Schalter im Bereich der Handgriffe 6 angeschlossen ist, so dass dieselbe Schaltwirkung wie bei der bewussten Betätigung eines solchen Not-Aus-Schalters auch automatisch bei Auslösung der Schaltanordnung 7 bewirkt wird.

Aus Fig. 2 ist ersichtlich, dass an dem Gehäuse 2 eine Halterung 8 vorgesehen ist, die eine Prallfläche 9 trägt. Die Prallfläche 9 dient als Betätiger für einen Schalter 10, der als Schaltmatte ausgestaltet ist. Die Prallfläche 9 weist mehrere Vorsprünge 11 auf, die als Auslöser für die Schaltmatte dienen. Bei dem dargestellten Ausführungsbeispiel sind die Vorsprünge 11 rein beispielhaft punktförmig ausgestaltet, jedoch können auch davon abweichende Ausgestaltungen vorgesehen sein, z. B. als gerade oder ringförmig verlaufende Linie

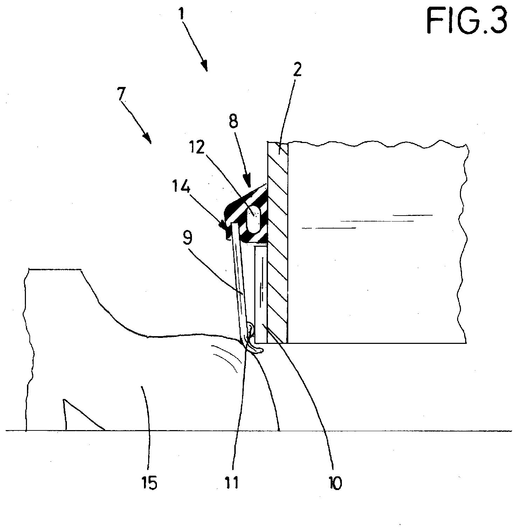

Die Halterung 8 ist als Elastomerprofil ausgestaltet, welches einerseits eine Hohlkammer 12 und andererseits eine insbesondere auch aus Fig. 3 ersichtliche Nut 14 aufweist, die nach unten offen ist. Während die Halterung 8 als flexible Profilleiste aus einem Elastomerprofil besteht und an unterschiedlich geformte Oberflächen angelegt und angepasst werden kann und beispielsweise mit dem Gehäuse 2 verklebt ist, ist die Prallfläche 9 als starres Bauteil ausgestaltet, so dass für unterschiedliche Oberflächengeometrien der Geräte, die mit der Schaltanordnung 7 versehen werden sollen, jeweils entsprechend angepasste Prallflächen 9 bereitgestellt werden können. Abweichend davon kann jedoch auch vorgesehen sein, die Prallfläche 9 als geradlinige Profilleiste mit einem Profil zu fertigen, wie es aus Fig. 3 ersichtlich ist, und in Art eines Polygonzugs Abschnitte einer derartigen Profilleiste zu verwenden, mit denen auch kurvig verlaufende Oberflächen, wie beispielsweise die des Gehäuses 2, durch entsprechende Abschnitte von Prallflächen 9 abgedeckt werden können.

Aus Fig. 3 ist weiterhin ersichtlich, dass der untere Rand der Prallfläche 9 zum Gehäuse 2 hin gebogen verläuft und dass dabei insbesondere ein Spalt, der zwischen der vertikalen Fläche der Prallfläche 9 und dem Schalter 10 besteht, nach unten hin abgedeckt ist, so dass beispielsweise das Eindringen von Fremdkörpern oder Verschmutzungen in diesen Spalt erschwert oder sogar vermieden ist.

Weiterhin ist in Fig. 3 ein Hindernis 15 in Form eines angedeuteten Schuhs ersichtlich. Der untere gerundete Rand der Prallfläche 9 wirkt unter anderem auch als Abweiser, so dass auch bei einem Kontakt mit dem Hindernis 15 die Prallfläche 9 sich nicht an dem Hindernis 15 verhakt.

Die flexible Aufhängung der Prallfläche 9 in der Halterung 8 ermöglicht eine Beweglichkeit der Prallfläche 9 nicht nur in horizontaler Richtung, um beispielsweise die Prallfläche 9 gegen den Schalter 10 zu führen, sondern auch eine Beweglichkeit der Prallfläche 9 aufwärts, so dass die Prallfläche 9 beispielsweise dem Hindernis 15 ausweichen kann und somit später ein leichtes Lösen der Prallfläche 9 von dem Hindernis 15 sichergestellt ist. Bei dieser Aufwärtsbewegung bewegt sich die Prallfläche 9 nicht ausschließlich vertikal, sondern aufgrund ihres Kontakts mit dem Hindernis 15 in einer schräg zum Gehäuse 2 aufwärts gerichteten Bewegung, so dass durch die Vorsprünge 11, die der Kontaktstelle am nächsten benachbart sind, unmittelbar eine Auslösung des Schalters 10 erfolgt.

Ein zuverlässiger Halt der Prallfläche 9 in der Halterung 8 wird dadurch sichergestellt, dass im oberen Bereich die Prallfläche 9 gerippt ausgestaltet ist und auch die Nut 14 eine dazu passende Profilierung aufweist, so dass ein Formschluss zwischen den Nuträndern und der Prallfläche 9 geschaffen wird. Die entsprechenden Nuten bzw. Rippen verlaufen parallel zu der Oberkante der Prallfläche 9 bzw. in Längsrichtung der Nut 14.

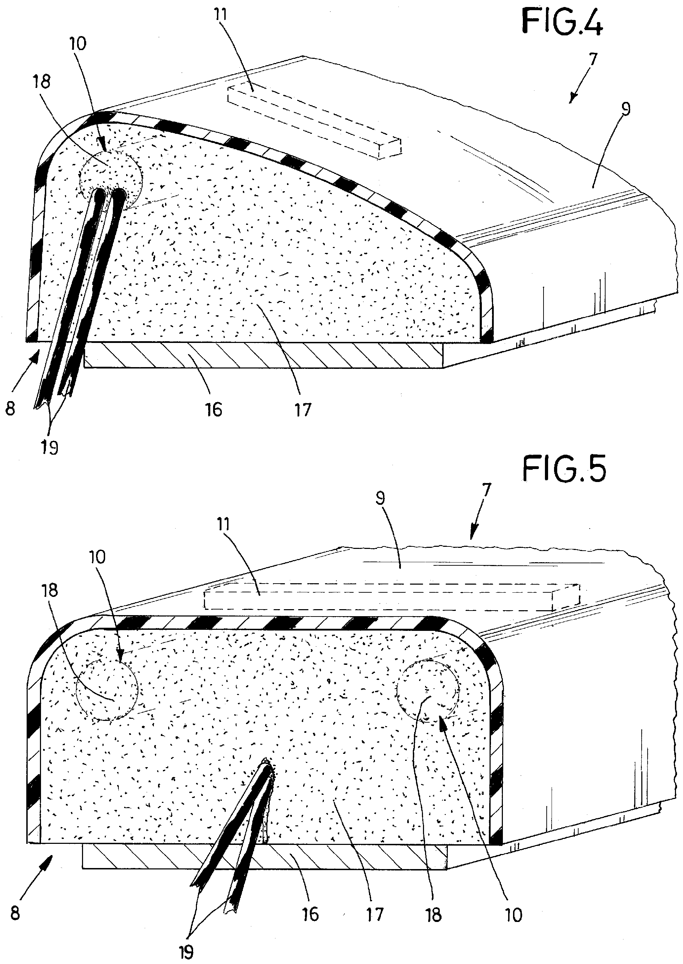

In den Fig. 4 und 5 ist jeweils eine Schaltanordnung 7 dargestellt, die eine Montageplatte 16 aufweist, welche beispielsweise aus Metall oder aus einem harten Kunststoff bestehen kann. In beiden Zeichnungen ist lediglich jeweils ein kurzer Abschnitt der betreffenden Schaltanordnung 7 dargestellt, wobei insgesamt die Schaltanordnung erheblich länger ausgestaltet ist als der dargestellte Abschnitt.

Die beiden Ausführungsbeispiele zeigen jeweils eine ebene Montageplatte 16. Abweichend davon kann die Montageplatte 16 an ihrer Rückseite, die von der Prallfläche 9 abgewandt ist, eine einwärts oder auswärts gewölbte oder anderweitig ausgestaltete Oberfläche aufweisen, um passgenau an ein vorhandenes Bauteil angelegt werden zu können. Eine solche Oberfläche kann beispielsweise dadurch erzielt werden, dass die Montageplatte 16 mittels eines 3-D-Verfahrens erzeugt wird. An der Montageplatte 16 ist ein Schaumstoffblock 17 befestigt, der aus einem flexiblen, elastisch verformbaren Kunststoffschaum besteht. Die Montageplatte 16 und der Schaumstoffblock 17 bilden gemeinsam die Halterung 8, mittels welcher die Schaltanordnung 7 an dem jeweiligen Gerät befestigt und gehalten wird.

In die Schaumstoffblöcke 17 sind jeweils Bohrungen eingebracht worden, und in diese Bohrungen sind anschließend Schaltleisten eingesetzt worden, die den jeweiligen Schalter 10 bilden. Anschließend sind die Bohrungen an ihren beiden Enden jeweils durch einen Verschlussstopfen 18 verschlossen worden, der aus dem gleichen Schaummaterial besteht wie der Schaumstoffblock 17. Anschlusskabel 19 verlaufen von den Schaltern 10, also von den Schaltleisten, nach außen. Die Verlegung der Anschlusskabel 19 innerhalb des jeweiligen Schaumstoffblocks 17 ist mit einfachen Mitteln möglich, indem hierzu Schnitte in den Schaumstoffblock 17 eingebracht und die Anschlusskabel 19 in den betreffenden Schnitt eingelegt werden.

Weiterhin sind Schnitte in die Schaumstoffblock 17 eingebracht worden, um darin jeweils einen Vorsprung 11 anzuordnen, der als Auslöser zwischen der Prallfläche 9 und dem Schalter 10 angeordnet ist und eine Bewegung der Prallfläche 9 auf den Schalter 10 überträgt. Bei den beiden Ausführungsbeispielen der Fig. 4 und 5 sind die Vorsprünge 11 nicht einstückig an die jeweilige Prallfläche 9 angeformt oder an den Schalter 10, sie werden auch nicht als integraler Bestandteil durch den Schaumstoffblock 17 gebildet. Vielmehr sind die Vorsprünge 11 als separate Leisten aus hartem Material, beispielsweise jeweils in Form eines Kunststoffstabs, und somit als separate Elemente ausgestaltet, die in eine entsprechende Aussparung des Kunststoffblocks 17 eingelegt worden sind.

Beim Ausführungsbeispiel der Fig. 4 ist lediglich eine einzelne Schaltleiste als Schalter 10 vorgesehen. Der Querschnitt dieser Schaltanordnung 7 stellt, grob vereinfacht, ein Trapez oder ein Dreieck dar, so dass sich der Schalter 10 in dem Bereich dieses Querschnitts befindet, wo der Schalter 10 den größten Abstand zur Montageplatte 16 aufweist.

Im Unterschied dazu sind beim Ausführungsbeispiel der Fig. 5 zwei Schaltleisten als Schalter 10 vorgesehen, und dementsprechend ist der Querschnitt dieses Ausführungsbeispiel annähernd rechteckig ausgestaltet, wobei sich die beiden Schaltleisten im Bereich der beiden Ecken befinden, die von der Montageplatte 16 entfernt angeordnet sind. Die beiden Schaltleisten wirken elektrisch so miteinander zusammen, dass sie gemeinsam einen Schalter 10 bilden. Aus diesem Grund ist bei diesem Ausführungsbeispiel, genauso wie bei dem der Fig. 4, die Verwendung von lediglich 2 Anschlusskabeln 19 vorgesehen, denn die gewünschte Schaltfunktion wird ausgelöst, wenn eine beliebige der beiden vorgesehenen Schaltleisten betätigt wird, oder auch wenn beide Schaltleisten gleichzeitig betätigt werden.

Die Prallflächen 9 der in den Fig. 4 und 5 dargestellten Ausführungsbeispiele bestehen aus einem harten Kunststoff, so dass die Prallflächen 9 als starre Elemente ausgestaltet sind. Angesichts der vergleichsweise einfachen Geometrie können die Prallflächen 9 der Fig. 4 und 5 aus einer Kunststoffplatte gebildet sein, die beispielsweise unter dem Einfluss von Wärme verformt worden ist. Insbesondere wenn formgebunden der Prallfläche 9 vorgesehen sind, die geometrisch komplexer sind als bei den beiden dargestellten Ausführungsbeispielen, kann eine Herstellung der jeweiligen Prallfläche 9 mittels eines 3-D-Verfahrens vorgesehen sein, so dass individuell an den jeweiligen Einsatzzweck angepasste Prallflächen 9 geschaffen werden können, ohne mit vergleichweise großem Aufwand ein spezielles Formwerkzeug dafür bereitstellen zu müssen.

## Patentansprüche

1. Sicherheits-Schaltanordnung (7) an einem beweglichen Gerät,
wobei die Schaltanordnung (7) einen Schalter (10) aufweist,
sowie eine den Schalter (10) nach außen abdeckende Umhausung,
wobei die Umhausung eine als Betätiger des Schalters (10) dienende Prallfläche (9) aufweist,
die Prallfläche (9) als starre Prallfläche (9) ausgestaltet ist, und die Prallfläche (9) zwischen einer ersten Ruhestellung und einer zweiten, einen Schaltvorgang des Schalters (10) auslösenden Betätigungsstellung beweglich gelagert ist, und zwischen der Prallfläche (9) und dem Schalter (10) ein als Auslöser bezeichneter Vorsprung (11) angeordnet ist, welcher bei der Bewegung der Prallfläche (9) in ihre Betätigungsstellung den Schalter (10) auslöst,
**dadurch gekennzeichnet, dass**
▪ der Schalter (10) als Schaltleiste oder Schaltmatte ausgestaltet ist,
▪ die Umhausung eine separate Prallfläche (9) aufweist,
▪ und die Prallfläche (9) auswechselbar an einer Halterung (8) gehalten ist.

2. Schaltanordnung nach Anspruch 1,
**dadurch gekennzeichnet,**
**dass** die Halterung (8) einen flexibel verformbaren Körper aufweist,
an welchem die Prallfläche (9) großflächig anliegt.

3. Schaltanordnung nach Anspruch 2,
**dadurch gekennzeichnet,**
**dass** der flexibel verformbare Körper aus einem Schaumwerkstoff besteht.

4. Schaltanordnung nach einem der vorhergehenden Ansprüche,
**dadurch gekennzeichnet,**
**dass** die Halterung (8) als flexible Leiste ausgestaltet ist, an welcher die Prallfläche (9) frei nach unten hängend gehalten ist.

5. Schaltanordnung nach Anspruch 4,
**dadurch gekennzeichnet,**
**dass** die flexible Leiste als Profilleiste aus einem Elastomerwerkstoff ausgestaltet ist.

6. Schaltanordnung nach Anspruch 5,
**dadurch gekennzeichnet,**
**dass** die Profilleiste als Hohlprofil ausgestaltet ist, welches im Querschnitt eine Hohlkammer (12) aufweist.

7. Schaltanordnung nach einem der vorhergehenden Ansprüche,
**dadurch gekennzeichnet,**
**dass** die Halterung (8) eine Nut (14) aufweist, welche die Prallfläche (9) aufnimmt.

8. Schaltanordnung nach Anspruch 7,
**dadurch gekennzeichnet,**
**dass** die Prallfläche (9) und die Nut (14) korrespondierende Profilierungen aufweisen, derart, dass die Prallfläche (9) formschlüssig in der Nut (14) gehalten ist.

9. Schaltanordnung nach einem der vorhergehenden Ansprüche,
**dadurch gekennzeichnet,**
**dass** die Prallfläche (9) an ihrem unteren Rand zum Gerät hin gebogen verläuft.

10. Schaltanordnung nach einem der vorhergehenden Ansprüche,
**dadurch gekennzeichnet,**
**dass** die Prallfläche (9) an ihrer zum Gerät gerichteten Innenseite einen den Auslöser bildenden Vorsprung (11) aufweist.

11. Schaltanordnung nach einem der vorhergehenden Ansprüche,
**dadurch gekennzeichnet,**
**dass** der Auslöser ein separates, zwischen der Prallfläche (9) und dem Schalter (10) angeordnetes Element aufweist.

12. Verfahren zum Herstellen einer Schaltanordnung nach einem der vorhergehenden Ansprüche,
wobei die Oberflächengeometrie eines vorhandenen Bauteils mittels eines Scanners erfasst wird und anschließend die Halterung mittels eines 3-D-Verfahrens erzeugt wird,
derart, dass die Halterung passgenau an die Oberfläche des Bauteils anlegbar ist.

13. Verfahren zum Herstellen einer Schaltanordnung nach einem der Ansprüche 1 bis 11,
wobei die Oberflächengeometrie eines vorhandenen Bauteils mittels eines Scanners erfasst wird und anschließend die Prallfläche (9) mittels eines 3-D-Verfahrens erzeugt wird,
derart, dass die Prallfläche (9) in einem vorbestimmten Abstand zur Oberfläche des Bauteils verlaufend montierbar ist.

## Claims

1. Safety circuit arrangement (7) on a movable device, where the circuit arrangement (7) incorporates a switch (10) and an enclosure to cover the switch (10) on the outside,
where the enclosure incorporates an impact surface (9) acting as a means of actuating the switch (10),
where the impact surface (9) is designed as a rigid impact surface (9) and the impact surface (9) is mounted movably between a first, that is, a resting position and a second, that is, an actuating position, which trips the switch (10),
and where a projecting portion (11) described as a trip element is arranged between the impact surface (9) and the switch (10) and, when the impact surface (9) moves, causes the switch (10) to shift to its actuating position,
**characterised in that**
▪ the switch (10) is designed as a switching strip or pressure-sensitive mat,
▪ the enclosure incorporates a separate impact surface (9),
▪ and the impact surface (9) is retained exchangeably on a bracket (8).

2. Circuit arrangement in accordance with claim 1, **characterised in that** the bracket (8) incorporates an elastically deformable element against which the impact surface (9) lies full-surface.

3. Circuit arrangement in accordance with claim 2, **characterised in that** the elastically deformable element is made from a foam material.

4. Circuit arrangement in accordance with any one of the foregoing claims, **characterised in that** the bracket (8) is designed as a flexible strip against which the impact surface (9) is held so as to hang down freely.

5. Circuit arrangement in accordance with claim 4, **characterised in that** the flexible strip is designed as a profiled strip made from an elastomer material.

6. Circuit arrangement in accordance with claim 5, **characterised in that** the profiled strip is designed as a hollow profile that in cross-section incorporates a hollow chamber (12).

7. Circuit arrangement in accordance with any one of the foregoing claims, **characterised in that** the bracket (8) incorporates a groove (14) to receive the impact surface (9).

8. Circuit arrangement in accordance with claim 7, **characterised in that** the impact surface (9) and the groove (14) incorporate corresponding profiles such that the impact surface (9) is held positively in the groove (14).

9. Circuit arrangement in accordance with any one of the foregoing claims, **characterised in that** the impact surface (9) at its bottom edge curves downwards towards the device.

10. Circuit arrangement in accordance with any one of the foregoing claims, **characterised in that** the impact surface (9) incorporates on its inner side oriented towards the device a projecting portion (11) forming the trip element.

11. Circuit arrangement in accordance with any one of the foregoing claims, **characterised in that** the trip element incorporates a separate element arranged between the impact surface (9) and the switch (10).

12. Method of producing a circuit arrangement in accordance with any one of the foregoing claims, where the surface geometry of an available component part is picked up by means of a scanner and the bracket is then generated by means of a 3D process such that the bracket can be precisely fitted against the surface of the component part.

13. Method of producing a circuit arrangement in accordance with any one of claims 1 to 11, where the surface geometry of an available component part is picked up by means of a scanner and the impact surface (9) is then generated by means of a 3D process such that the impact surface (9) can be fitted so as to extend at a predetermined distance from the surface of the component part.

## Revendications

1. Ensemble de commutation de sécurité (7) sur un appareil mobile, sachant que l'ensemble de commutation de sécurité (7) présente un interrupteur (10) ainsi qu'un boîtier recouvrant l'interrupteur (10) par rapport à l'extérieur,
sachant que le boîtier présente une surface de percussion (9) servant à actionner l'interrupteur (10),
sachant que la surface de percussion (9) est configurée en surface de percussion (9) rigide et que cette surface de percussion (9) est en appui entre une première position de repos et une seconde position d'actionnement qui déclenche une séquence de commutation de l'interrupteur (10),
et sachant qu'entre la surface de percussion (9) et l'interrupteur (10) est disposée une protubérance (11) désignée comme déclencheur, protubérance qui déclenche l'interrupteur (10) lorsque la surface de percussion (9) se déplace jusque sur sa position d'actionnement. **caractérisé en ce que**
▪ l'interrupteur (10) est configuré en bandeau d'actionnement ou en tapis de commutation,
▪ le boîtier présente une surface de percussion (9) séparée,
▪ et que la surface de percussion (9) est maintenue de manière remplaçable contre un support (8).

2. Ensemble de commutation selon la revendication 1, **caractérisé en ce que** le support (8) présente un corps déformable de manière flexible et contre lequel la surface de percussion (9) applique sur une grande surface.

3. Ensemble de commutation selon la revendication 2, **caractérisé en ce que** le corps déformable de manière flexible est en matériau mousse.

4. Ensemble de commutation selon l'une des revendications précédentes, **caractérisé en ce que** le support (8) est configuré en bandeau flexible contre lequel la surface de percussion (9) est maintenue librement pendante vers le bas.

5. Ensemble de commutation selon la revendication 4, **caractérisé en ce que** le bandeau flexible est configuré en bandeau profilé à partir d'un matériau en élastomère.

6. Ensemble de commutation selon la revendication 5, **caractérisé en ce que** le bandeau profilé est configuré en profilé creux dont la section présente une cavité (12).

7. Ensemble de commutation selon l'une des revendications précédentes, **caractérisé en ce que** le support (8) présente une rainure (14) qui reçoit la surface de percussion (9).

8. Ensemble de commutation selon la revendication 7, **caractérisé en ce que** la surface de percussion (9) et la rainure (14) présentent des profils s'épousant de sorte que la surface de percussion (9) est retenue par adhérence des formes dans la rainure (14).

9. Ensemble de commutation selon l'une des revendications précédentes, **caractérisé en ce que** la surface de percussion (9) présente un tracé incurvé contre son bord inférieur regardant l'appareil.

10. Ensemble de commutation selon l'une des revendications précédentes, **caractérisé en ce que** la surface de percussion (9) présente, sur son côté intérieur regardant l'appareil, une protubérance (11) qui forme le déclencheur.

11. Ensemble de commutation selon l'une des revendications précédentes, **caractérisé en ce que** le déclencheur présente un élément à part disposé entre la surface de percussion (9) et l'interrupteur (10).

12. Procédé de production d'un ensemble de commutation selon l'une des revendications précédentes, sachant que la géométrie des surfaces d'un composant présent est saisie par un scanner et qu'ensuite le support est fabriqué à l'aide d'un procédé 3D de sorte que le support s'ajuste exactement sur la surface du composant.

13. Procédé de production d'un ensemble de commutation selon l'une des revendications 1 à 11, sachant que la géométrie des surfaces d'un composant présent est saisie à l'aide d'un scanner et qu'ensuite la surface de percussion (9) est générée à l'aide d'un procédé 3D de sorte que la surface de percussion (9) est montable et présente un tracé situé à une distance prédéfinie de la surface du composant.
